# EUROPEAN PATENT APPLICATION

(11) **EP 1 237 383 A1**
(43) Date of publication of application: **04.09.2002**
(21) Application number: 01104132.4
(22) Date of filing: 21.02.2001
(51) Int. Cl.: H04Q 7/32

(54) **Portable communication device and method for receiving broadcast messages**

(71) Applicant: Sony International (Europe) GmbH, 10785 Berlin (DE)
(72) Inventor: Becker, Johannes, 85304 Ilmmünster (DE); Schäfer, Ronald, Sony International (Europe) GmbH, Heisenbergbogen 1, 85609 Aschheim (DE)
(74) Representative: Körber, Martin, Dipl.-Phys.

(57) **Abstract**

The present invention relates to a portable communication device (1) for a wireless communication system, comprising a receiving means (18) for receiving broadcast messages from at least one predetermined channel, whereby broadcast messages contain information and are transmitted in channels and respectively one channel is defined for transmitting broadcast messages containing the same type of information. The portable communication device (1) further comprises a storing means (14, 19) for storing a plurality of received broadcast messages.

Further, the present invention relates to a method for receiving broadcast messages in a wireless communication system.

## Description

The present invention relates to a portable communication device for a wireless communication means comprising a receiving means for receiving broadcast messages. Further, the present invention relates to a method for receiving broadcast messages in a wireless communication system.

Mobile communication systems, like the GSM (Global System for Mobile Telecommunication) and the UMTS (Universal Mobile Telephone System), allow to send broadcast messages to a plurality of users at the same time. An example is the SMS (Short Message System)-Cell broadcast in the GSM system. The opposite to broadcast messages are personal messages, that are sent to a particular person or a group of namely defined persons only.

Broadcast messages, as stated above, are used to transmit information to a plurality of not identified users, whereby this messages are independent of the receiving person (user). These broadcast messages respectively contain specific type of information, e.g. information about a location, traffic, news, stock prices and quotes, weather, network related information, etc. and are arranged in channels, whereby respectively one channel is defined for transmitting one type of said information.

Some of the information contained in broadcast messages are more or less static, e.g. information about the location. That means, that the content of the information is changing in relative wide time intervals, e.g. one time per day. The content of most types of information in broadcast messages, however, is changing at frequent intervals, e.g. stock prices or news, where the content is changed e.g. every hour.

The user of a mobile telecommunication means, such as a cellphone or a personal digital assistant (PDA), can choose the channel, i.e. the type of information, he would like to receive. In prior art, if the mobile telecommunication means receives a broadcast message, a prior received message is dropped and is replaced by the last received broadcast message. This has the disadvantage, that the user often miss to read received broadcast messages, particularly if the broadcast messages are frequently transmitted and/or if the user choose to receive more than one type of information (channel). This is also true, if the user reads his received broadcast messages in relatively wide time intervals.

The object of the present invention is therefore to provide a portable communication device for a wireless communication means with a receiving means for receiving broadcast messages and to provide a method for receiving broadcast messages in a wireless communication system, which prevents a user from losing received broadcast messages before reading.

The above object is achieved by a portable communication device for a wireless communication system according to claim 1, comprising a receiving means for receiving broadcast messages from at least one predetermined channel, whereby broadcast messages, which contain the same type of information, are transmitted in respectively one channel. The portable communication device further comprises a storing means for storing a plurality of received broadcast messages.

The above object is further achieved by a method for receiving broadcast messages in a wireless communication system according to claim 9, whereby broadcast messages from at least one predetermined channel of the wireless communication system are received. Broadcast messages, which contain the same type of information, are transmitted in one respectively channel. According to the present invention, a plurality of received broadcast messages are stored in a storing means. Further, at least parts of the received broadcast messages are output to a user by an output means.

The storing of a plurality of received broadcast messages has the advantage, that the user does not lose received broadcast messages unreaded, even if the user forget or miss to read received broadcast messages for a relatively long time, e.g. some hours.

The present invention has further the advantage, that it allows the user to see a history and/or a trend of information. This is very useful in all cases where the sequence of information gives additional information to the user, e.g. stock prices, news or traffic information.

The storing means is adapted to store a predetermined number of at last received broadcast messages, e.g. the last ten received broadcast messages. The at a time oldest stored broadcast message is erased to prevent the storing means from an overflow and thus to prevent the at last received message from erasing.

Advantageously, the received broadcast messages are sorted by the output means according to their type of information. For example, if the user of the portable chose to receive one channel with broadcast messages containing information about news and one channel containing about stock prices, the received broadcasting messages, which are usually received scrambled in news and stock prices, are sorted in messages about news and messages about stock prices and displayed in sorted form to the user.

A user of the portable communication means has the capability, to select a stored broadcast message via an input means, e.g. a jogdial or keys from a menu and/or a list of stored broadcast messages. Thereupon the selected broadcast message or at least a part of this message, e.g. the headline, is output on a display by the output means.

Further advantageously, the portable communication device according to the present invention comprises a converting means for converting broadcast messages received as text messages into speech signals and for supplying the speech signals to a output means to be output as acoustic signals. The output means can e.g. either be a loudspeaker of the portable communication device or a loudspeaker of a headset. So, received broadcast messages, which are received in form of text, can be output in form of speech instead of or additional to output text on the display.

The portable communication device comprises further an extracting means for extracting specific values from the received broadcast messages, whereby the output means outputs specific values extracted from several received broadcast messages to a user. The extracting means extracts relevant data, which is contained in the broadcast messages e.g. at predefined locations within the respective message. Then, the extracting means calculates a trend based on the specific values to display this trend e.g. as text or as a trend graph.

The storing means for storing a plurality of received broadcast messages can be either fixedly implemented as internal phone memory or it can be implemented as a removable memory device in the portable communication device.

In the following description, a preferred embodiment of the present invention is explained in more detail in relation to the enclosed drawings, in which
figure 1 shows a schematic top view of a portable communication device for a wireless communication system according to the present invention, and
figure 2 shows a block diagram of a portable communication device according to the present invention.

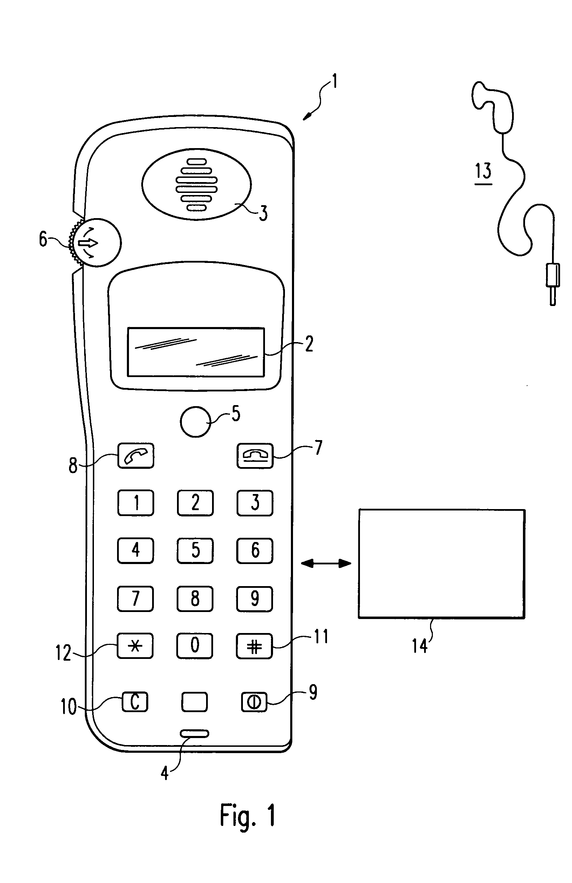

Figure 1 shows a schematic top view of a portable telephone 1 (portable communication device) for a wireless telecommunication system as e.g. the GSM or UMTS system.

The portable telephone 1 shown in figure 1 comprises a display 2, on which pieces of information like characters, menu items, text information, a status line with icons visualising status information or the like can be displayed. The portable telephone 1 further comprises a loudspeaker 3 on the upper front part and a microphone 4 on the lower front part of the casing. Further, an enter or menu key 5 as enter means for selecting a respective menu item or function is provided. The portable telephone 1 further comprises the usual 10 alphanumeric keys (numbers 0 to 9), a communication start key 8, a communication end key 7, a pound key 11, a star key 12, a power-on/off key 9 and a clear key 10. The portable telephone 1 also comprises optional a jogdial 6, which is a rotable key, a part of which is exposed to the outside. The exposed part can be touched by the finger of a user's hand and may be rotated clockwise or counterclockwise to scroll through pieces of information displayed on the display 2. The display 2 of the portable telephone 1 comprises advantageously a graphical display, which has a higher resolution than usual text or character displays.

Optionally, the user can connect a so-called headset 13, which comprises a loudspeaker and a microphone, to the portable telephone 1. Further optionally, the portable telephone according to the present invention has a removable memory device 14, which could act as the storing means according to the present invention for storing a plurality of the last received broadcast messages.

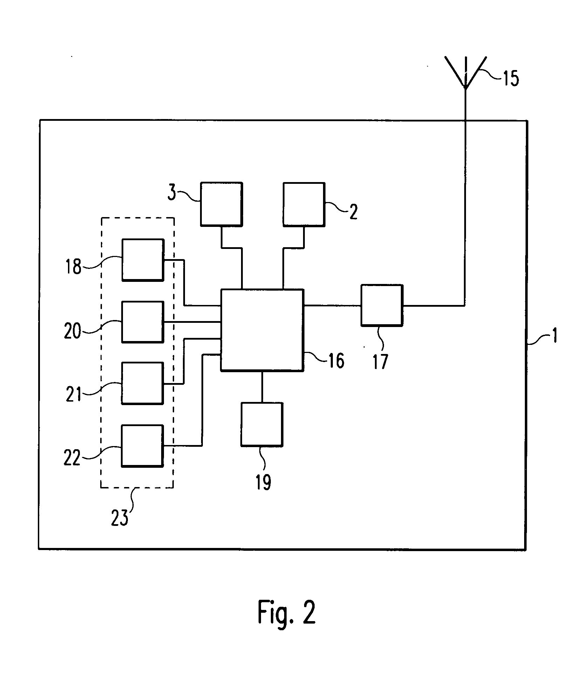

In relation to figure 2, the function of the portable telephone 1 according to the present invention is described in detail, whereby figure 2 shows a block diagram of the portable telephone 1 (portable communication device).

The portable telephone 1 according to the present invention comprises an antenna 15 connected to a transceiving means 17 for communicating with other communication devices and/or base stations of the wireless communication system over an air-interface. The portable telephone 1 further comprises the receiving means 18 for receiving broadcast messages, phone memory 19, which acts as storing means (instead of or additional to the removable memory device) for storing a plurality of received broadcast messages, output means 20 for outputting the received broadcast messages, converting means 21 for converting the received text messages to speech and extracting means 22 for extracting specific values from the received broadcast messages. The operation of the portable telephone 1 is controlled by a processing means 16.

Advantageously, the means, which are necessary for receiving , outputting, converting and extracting the broadcast messages are implemented as program information (software), which is stored in a program memory 23. This software is among other software used by the processing means 16 for controlling the operation of the portable telephone 1.

Further, in figure 2 the display 2 for displaying the received broadcast messages and a history and a list respectively of the received broadcast messages as well as the loudspeaker 3 for outputting the converted broadcast messages as spoken messages is shown.

For receiving broadcast messages, a user of the portable telephone 1 has the capability to preselect one or more channels, whereby each channel is defined to transmit broadcast messages containing respectively one type of information. For example, one channel is defined for transmitting information about the stock-market, an other channel is defined for transmitting information about traffic, an so on. Thus, the user can choose one or more channels containing information of his/her interest for receiving respective information.

According to the present invention, a plurality of received broadcast messages is stored in a storing means. This can for example happen in a removable memory device 14 as shown in fig. 1 and/or in a phone memory 19, which is fixedly implemented in the portable telephone 1 as shown in fig. 2. Thus, the portable telephone 1 is able to store several broadcast messages of one or more particular channels in the storing means. The portable telephone 1 has an output means 20 allowing a user to select a specific message via an inputting means (e.g. jog dial and/or key input) and output each of the stored broadcast messages via the output means 20. By this means, the user receives a history and thus a trend of received broadcast messages.

If the user chooses more than one channel of interest, it makes sense to display the received broadcast messages ordered by channel (i.e. by type of information) via the output means 20, since the broadcast messages are received scrambled. That means, that broadcast messages (respectively their titles) e.g. containing stock information are displayed sequentially, after then broadcast messages (respectively their titles) containing e.g. news are displayed sequentially or in a different display process.

Instead of or additionally, received broadcast messages, which are received as text messages, could converted into spoken messages. Thereby, the converting means 21 converts the text messages into speech signals and supplies the speech signals to a loudspeaker 3. Then, the loudspeaker 3 outputs the speech signals as acoustic signals.

Advantageously, an extracting means 22 is implemented in the portable telephone. The extracting means 22 extracts specific values from the received broadcast messages. The specific values are for example stored on specific locations within the respectively broadcast message. So, the extracting 22 means can further calculate a trend of information and display the calculated trend for example in tabular or graphical on the display 2. This can even be extrapolated to future values, e.g. to generate a personal stock forecast.

## Claims

1. Portable communication device (1) for a wireless communication system, comprising a receiving means (18) for receiving broadcast messages from at least one predetermined channel of the wireless communication system, whereby said broadcast messages contain information and one respective channel is defined for transmitting broadcast messages containing the same type of information,
**characterized by**
a storing means (14, 19) for storing a plurality of received broadcast messages, and
an output means (20) for outputting at least parts of received broadcast messages to a user.

2. Portable communication device (1) according to claim 1,
**characterized in**
**that** the storing means (14, 19) is adapted to store a predetermined number of last received broadcast messages.

3. Portable communication device (1) according to claim 1 or 2,
**characterized in**
**that** the output means (20) sorts the received broadcast messages according to their type of information.

4. Portable communication device (1) according to claim 1, 2 or 3,
**characterized in,**
**that** said output means (20) outputs at least parts of received broadcast messages on a display (2).

5. Portable communication device (1) according to one of the claims 1 to 4,
**characterized by**
a converting means (21) for converting broadcast messages received as text messages into speech signals and for supplying the speech signals to a loudspeaker (3) to be output as acoustic signals.

6. Portable communication device (1) according to one of the claims 1 to 5,
**characterized by**
an extracting means (22) for extracting specific values from the received broadcast messages, whereby said output means (20) outputs specific values extracted from several received broadcast messages to a user.

7. Portable communication device (1) according to one of the claims 1 to 6,
**characterized in**
**that** the storing means (14, 19) is implemented as internal phone memory (19) in the portable communication device (1).

8. Portable communication device (1) according to one of the claims 1 to 7,
**characterized in**
**that** the storing means (14, 19) is a removable memory device (14).

9. Method for receiving broadcast messages in a wireless communication system, comprising the step
receiving broadcast messages from at least one predetermined channel of the wireless communication system, whereby said broadcast messages contain information and one respective channel is defined for transmitting broadcast messages containing the same type of information,
**characterized in**
storing a plurality of received broadcast messages, and
outputting at least parts of received broadcast messages to a user.

10. Method according to claim 9,
**characterized in**
storing a predetermined number of at last received broadcast messages.

11. Method according to claim 9 or 10,
**characterized in**
sorting the received broadcast messages according to their type of information.

12. Method according to claim 9, 10 or 11,
**characterized in**
outputting at least parts of received broadcast messages on a display (2).

13. Method according to one of the claims 9 to 12,
**characterized in**
converting broadcast messages received as text messages into speech signals and supplying the speech signals to a loudspeaker (3) to be output as acoustic signals.

14. Method according to one of the claims 9 to 13,
**characterized in**
extracting specific values from the received broadcast messages, whereby specific values extracted from several received broadcast messages are output to a user.

15. Method according to one of the claims 9 to 14,
**characterized in**
storing the broadcast messages in a phone memory (19), which is implemented internal in the portable communication device (1).

16. Method according to one of the claims 9 to 15,
**characterized in**
storing the broadcast messages in a removable memory device (14).
